# EUROPÄISCHE PATENTSCHRIFT

(11) **EP 1 564 934 B1**
(45) Veröffentlichungstag und Bekanntmachung des Hinweises auf die Patenterteilung: **21.03.2012**
(21) Anmeldenummer: 04027044.9
(22) Anmeldetag: 13.11.2004
(51) Int. Cl.: H04W 4/02

(54) **Positionsdatenzuordnung für Festnetzanschlüsse**
Position data allocation for fixed line connections
Attribution de données de localisation pour connexions fixes

(30) Priorität: 11.02.2004 DE 102004006656
(43) Veröffentlichungstag der Anmeldung: 17.08.2005
(73) Patentinhaber: Deutsche Telekom AG, 53113 Bonn (DE)
(72) Erfinder: Brackmann, Ludwig, Dipl.-Ing., 53225 Bonn (DE)

(56) Entgegenhaltungen:
- US-A1- 2002 086 669
- US-A1- 2002 087 726

## Beschreibung

Die vorliegende Erfindung betrifft ein Verfahren zur Nutzung eines über ein Mobilfunknetz zugänglichen Dienstes, der Informationen zur Verfügung stellt, die auf den momentanen Aufenthaltsort eines mobilen Endgerätes bezogen sind. Dabei wird der Aufenthaltsort des Endgerätes und damit des Kunden bei einer Anwahl des Dienstes über eine Peilung des mobilen Endgerätes festgestellt.

Derartige Dienste, die ortsabhängige Information anbieten, sind als sogenannte "Location-based Services" "(LBS") bekannt und finden in Mobilfunknetzen immer weitere Verbreitung. Um einen solchen Dienst zu nutzen, schickt der Kunde eine Kurznachricht ("SMS") an die entsprechende Service-Rufnummer. Mit dieser SMS wird eine automatische Ortung der aktuellen Position des Mobiltelefons durch eine Peilung initiiert und dem Dienst übertragen. Dieser nutzt die Positionsinformation, um die gewünschte und dem Standort entsprechende Information auswählen zu können. Über diesen Dienst ist es beispielsweise für jedermann bequem und schnell möglich, das dem momentanen Standort nächste Restaurant zu finden. Wegen der großen Popularität werden diese Location-based Services im Mobilfunkbereich besonders stark unterstützt und können auf große aktuelle Datenbestände zurückgreifen.

Derart ortsabhängige Informationen sind jedoch auch für Kunden von Interesse, die sich aktuell nur eines Festnetzanschlusses bedienen können oder wollen, oder denen gerade ein IP-Netz Anschluss, wie ein Internetrechner, zur Verfügung steht. Auch diese Kunden suchen beispielsweise die nächstgelegene Notapotheke oder Kontakte über regionale Anzeigen. Dabei ist es jedoch problematisch, die Position eines Festnetzanschlusses oder des Internetrechners festzustellen. So ist dem Netzanbieter zwar die Rechnungsadresse und damit der vermeintliche Standort des Kunden bekannt, jedoch kann nicht ohne weiteres unmittelbar auf die für das Mobilfunknetz zur Verfügung stehenden Daten zugegriffen werden. Außerdem müssten bei einem solchen Zugriff die aus der Rechnungsadresse bekannten Daten zunächst von dem benutzten Adressformat in das für den SMS-LBS Verkehr übliche Format umgewandelt werden. Ein weiteres Problem ist, dass bei Telephon-Anlagen lediglich ein einziger Eintrag verzeichnet ist, obwohl auch abgesetzte Standorte über diese Rufnummer erreichbar sein können.

Die US 2002/0086669 A1 betrifft ein Verfahren zum Bereitstellen eines lokalisierten Multimediaservices zu einem feststehenden Terminal. Es wird als problematisch angesehen, wenn der Nutzer sein mobiles Telefon vergessen hat oder dieses beschädigt ist. Dann kann das mobile Endgerät nämlich nicht mehr herangezogen werden, um die Position des Nutzers zu bestimmen.

Aufgabe der Erfindung ist es nunmehr, ein Verfahren zu schaffen, das sich mit einfachen Mitteln kostengünstig umsetzen lässt und das es erlaubt, auch von immobilen Netzanschlüssen, ohne eine besondere Datenkonvertierung und bei automatischer Lokalisation zeitnah auf die für den Mobilfunk bereitgestellten Dienste zum Erhalt ortsbezogener Information zugreifen zu können.

Diese Aufgabe wird durch ein Verfahren mit den kennzeichnenden Merkmalen des Anspruch 1 gelöst. Vorteilhafte Ausgestaltungen des Verfahrens sind in den Unteransprüchen genannt.

Der wesentliche Gesichtspunkt der Erfindung liegt darin, dem stationären Anschluss zumindest für einen Initialisierungsprozess ein mobiles Endgerät zuzuordnen, indem es insbesondere in die räumliche Nähe gebracht wird. Dann wird die für das mobile Endgerät verfügbare Lokalisierungsfunktion aktiviert und der von dieser Funktion ermittelte Aufenthaltsort, der eigentlich für das mobile Endgerät bestimmt wurde, dem stationären Anschluss zugeordnet. Mit diesen, insbesondere im "richtigen" Datenformat vorliegenden, Ortskoordinaten kann der Kunde dann den LBS des Mobilfunknetzes problemlos nutzen. Die Erfindung bedient sich folgender Schritte: Zunächst wird dem zu nutzenden stationären Anschluss, der seinerseits an ein Kommunikationsnetz angeschlossen ist, das mobile Endgerät zugeordnet. Dann wird der LBS- Dienst beispielsweise mittels des mobilen Endgerätes angewählt und dessen Aufenthaltsort festgestellt. Die vom Dienst zurückgegebenen Ortskoordinaten werden registriert. Mit diesen Daten wird dann vom stationären Anschluss aus und unter Nutzung des Kommunikationsnetzes und/oder des Mobilfunknetzes der LBS Dienst zum Abruf ortsbezogener Information angerufen. Dabei stellt der Dienst die gewünschte Information auf die gewohnte Art bereit und gibt sie über das stationäre Endgerät oder eine diesem zugeordnete Ausgabeeinheit aus. Die Lokalisierung des stationären Gerätes kann einmalig im Sinne einer Initialisierung oder mehrmalig erfolgen.

Vorteilhafterweise wird das mobile Endgerät dem stationären Anschluss dadurch zugeordnet, dass es in die räumliche Nähe zum stationären Anschluss gebracht wird, wobei das Ausmaß der räumlichen Nähe im Verhältnis zur Ortsbezogenheit der gewünschten Information zu sehen ist. Im Normalfall ist unter räumliche Nähe die Sicht- oder Rufweite, insbesondere in einem Radius von 20m, zu verstehen. In Praxis wird sich der Nutzer mit seinem Mobiltelephon meist unmittelbar neben dem stationären Anschluss befinden.

Die Registrierung der für den stationären Anschluss ermittelten Ortskoordinaten kann einerseits dadurch erfolgen, dass dem Dienst eine Kennung, beispielsweise die Telephonnummer (CLI) oder eine IP-Adresse, des stationären Anschlusses vermittels des mobilen Endgerätes mitgeteilt wird. Der Dienst registriert diese Kennung dann zusammen mit den Koordinaten des Aufenthaltsortes. In diesem Fall wird die Anmeldung des stationären Anschlusses vollständig vom mobilen Gerät aus vorgenommen. Der Dienst kann dann sofort vom stationären Anschluss aus genutzt werden. In einer anderen Ausführungsform werden die Koordinaten des Aufenthaltsortes der Ausgabe des mobilen Endgerätes, z.B. durch Ablesen auf dem Display, entnommen und dann dem Dienst vermittels des stationären Anschlusses, insbesondere per Voice oder SMS, mitgeteilt. In diesem Fall dient das mobile Gerät lediglich der Lokalisierung, während sich der stationäre Anschluss selber beim Dienst anmeldet.

Es sei an dieser Stelle darauf verwiesen, dass der Festnetzanschluss auch eine weitabgesetzte Nebenstelle eines nach außen auftretenden Festnetzanschlusses sein kann. Es ist auch möglich, dass dem stationären Anschluss ein stationäres Endgerät oder ein im Bereich des Anschlusses mobiles Endgerät, beispielsweise ein sogenanntes "Homehandy" oder eine mobile Workstation, zugeordnet ist.

Der entscheidende Vorteil des erfindungsgemäßen Verfahrens liegt auf der Hand: So kann ohne weiteres auch von Festnetzanschlüssen auf die speziellen Dienste zugegriffen werden, die in Mobilfunknetzen verfügbar sind. Dabei bedarf es keiner besonderen Anpassung der Datenformate. Das Verfahren ist technisch einfach und in kurzer Zeit mit den vorhandenen Einrichtungen umzusetzen. Insofern ist es sowohl für den Kunden als auch für die Provider von Diensten und Netzen von großem Interesse.

Prinzipiell sind bei der Umsetzung der Erfindung zwei Anwendungen zu unterscheiden: So kann die Erfindung einerseits für Festnetzanschlüsse, insbesondere für Telephonanschlüsse, mit fester Adresse und andererseits für Anschlüsse, wie Internetanschlüsse, mit variabler Adresse eingesetzt werden. Auch wenn die Art der Adresse den generellen Gedanken der Erfindung nicht berührt, so sind die Anforderungen an das Verfahren doch unterschiedlich.

In dem zunächst zu behandelnden Fall ist dem stationären Anschluss eine feste Kennung, insbesondere eine Telephonnummer (CLI), zugeordnet. Entsprechend kann das Kommunikationsnetz des stationären Anschluss ein Telephonfestnetz sein. In diesem Fall kann sich der Kunde mit dem Mobiltelefon in unmittelbare Nähe des zu lokalisierenden Telefons begeben und eine SMS an die Servicenummer des LBS-Anbieters schicken. Dieser bestimmt die aktuelle Position des Mobiltelefons. Die SMS kann die Festnetzrufnummer oder die IP-Adresse (=Absendenrummer für "SMS im Festnetz"- LBS) beinhalten, der die soeben festgestellte Position zugeordnet werden soll. Die Zuordnung der Position zu Festnetzrufnummer kann dann beim LBS-Anbieter dauerhaft gespeichert werden. Ein späteres Update, insbesondere nach einem Umzug der Nummer, ist auf dieselbe Weise möglich. Die Kennung des Festnetzanschlusses wird vorteilhafterweise von dem Dienst zusammen mit den ermittelten Koordinaten des Aufenthaltsortes gespeichert. In einer anderen Ausführungsform werden die Koordinaten in einem dem Anschluss zugeordneten Endgerät selber gespeichert und bei Bedarf dem Dienst zusammen mit der Kennung übermittelt.

Nach der Initialisierung kann der Kunde den LBS von seinem Festnetzanschluss aus, beispielsweise per SMS im Festnetz, nutzen. Bei Anwahl vermittels des Endgerätes erkennt der Dienst die Kennung des Anschlusses, ordnet diesem den entsprechenden Ort zu, den er entweder übermittelt bekommt oder selber gespeichert hat, stellt den Service bereit und gibt die Information über das Endgerät aus. Der LBS-Anbieter bedient sich dabei der zuvor gespeicherten Positionsdaten des Festnetzanschlusses, die im Mobilfunkformat vorliegen, um auf die Service-Datenbanken zugreifen zu können.

Für den beschriebenen Schritt, der dem Festnetzanschluss seine Position zuordnet, sind prinzipiell drei Möglichkeiten der Umsetzung vorstellbar: So kann der Kunde selbständig eine entsprechende die Koordinaten beinhaltende oder die Koordinatenermittlung auslösende SMS an den Anbieter schicken. Andererseits kann das Festnetzendgerät automatisch mit dem Mobiltelefon, beispielsweise via Bluetooth, kommunizieren und die SMS automatisch versenden. Das Festnetzendgerät kann aber auch, beispielsweise via Bluetooth, die am mobilen Gerät verfügbaren Daten, wie Feldstärke oder Kennung der Sendemasten abfragen und daraus selbständig oder in Kombination mit einem Server im Festnetz die Position errechnen. Dazu ist es nicht nötig, eine Mobilfunk-SMS zu versenden.

Die zweite Anwendung betrifft stationäre Anschlüsse mit variabler Adresse, wie sie insbesondere von Internetanschlüssen realisiert werden, zumindest solange die Datenübertragung noch nicht nach dem IP-V6 Standard geschieht. In diesen Fällen, in denen das Kommunikationsnetz des stationären Anschluss das herkömmliche Internet ist, wird dem Computer als Endgerät eine variable IP-Adresse zugeordnet, die er verliert, sobald er sich aus dem Internet abmeldet. Beim erneuten Anmelden bekommt er entsprechend eine neue Adresse. Wie gehabt, bestimmt der Kunde in einem ersten Schritt mittels eines Mobiltelefons die Position seines Computers. Dieser Schritt braucht nur einmal vorgenommen zu werden, wenn die Position für spätere Anwendungen gespeichert wird. Im zweiten Schritt kann der Nutzer dann via Internet ortsabhängige Informationen betreffend seinen Standort bekommen.

Der erste Schritt kann folgendermaßen ablaufen: Nach der Ortung des in die Nähe des Rechner gebrachten Mobiltelephones erhält der Kunde auf der Webseite des Anbieters einen eindeutigen Code, der per SMS an eine Servicerufnummer gesendet wird. Der Anbieter kann nun aufgrund des eindeutigen Codes die Positionsdaten, die mit Hilfe des Mobilfunknetzes ermittelt wurden, dem richtigen Nutzer, respektive dessen IP-Adresse, zuordnen. Der Anbieter speichert daraufhin die ermittelten Positionsdaten, beispielsweise als Cookie, auf dem Rechner des Kunden, so dass bei späteren Zugriffen die Positionsdaten nicht erneut ermittelt werden müssen. Bei mobilen Internet-Geräten kann hier ein Cookie mit kurzer Gültigkeit verwendet werden. Bei dieser Vorgehensweise spielt es keine Rolle, ob feste oder dynamische IP-Adressen verwendet werden. Im zweiten Schritt kann der Kunde den LBS mittels seines Internetzuganges nutzen. Der LBS-Anbieter nutzt nun die zuvor gespeicherten Positionsdaten des Festnetzanschlusses, um auf die Service-Datenbanken des Mobilfunkanbieters zugreifen zu können. Die Feststellung und Registrierung des Ortes wird somit lediglich bei der ersten Anwahl des Dienstes durchgeführt und bleibt nachfolgend für weitere Anwahlen erhalten.

Wiederum gibt es für den ersten Schritt, der dem Festnetzanschluss eine Position zuordnet, drei Umsetzungsmöglichkeiten: Der Kunde kann selbständig eine SMS an die Kurzwahlnummer des Anbieters schreiben, die den Ort des Computers enthält. Der Computer kann auch automatisch mit dem Mobiltelefon, z.B. via Bluetooth, kommunizieren und die entsprechende SMS automatisch senden. In der dritten Variante ruft der Computer die am Gerät verfügbaren Daten, wie die Feldstärke oder die Kennung der Sendemasten, ab und errechnet daraus selbständig oder in Kombination mit einem im Festnetz verfügbaren Server die Position.

Das für das Internet vorgesehene Verfahren lässt sich beispielsweise in folgenden Anwendungen einsetzen: So ist es möglich, eine Kartographierung von WLAN-Accesspoints mit der im Mobilfunk üblichen Genauigkeit vorzunehmen. Über diese WLAN-Accesspoints oder "HotSpots" kann ein LBS abgerufen werden. Auch eine Kartographierung von IT/TK-Geräten und Anlagen für spätere Service-Einsätze ist möglich. In einer anderen Variante werden beliebige, an IP-Netzen auch über Funk angeschlossene Geräte, beispielsweise Hausgeräte, kartographiert.

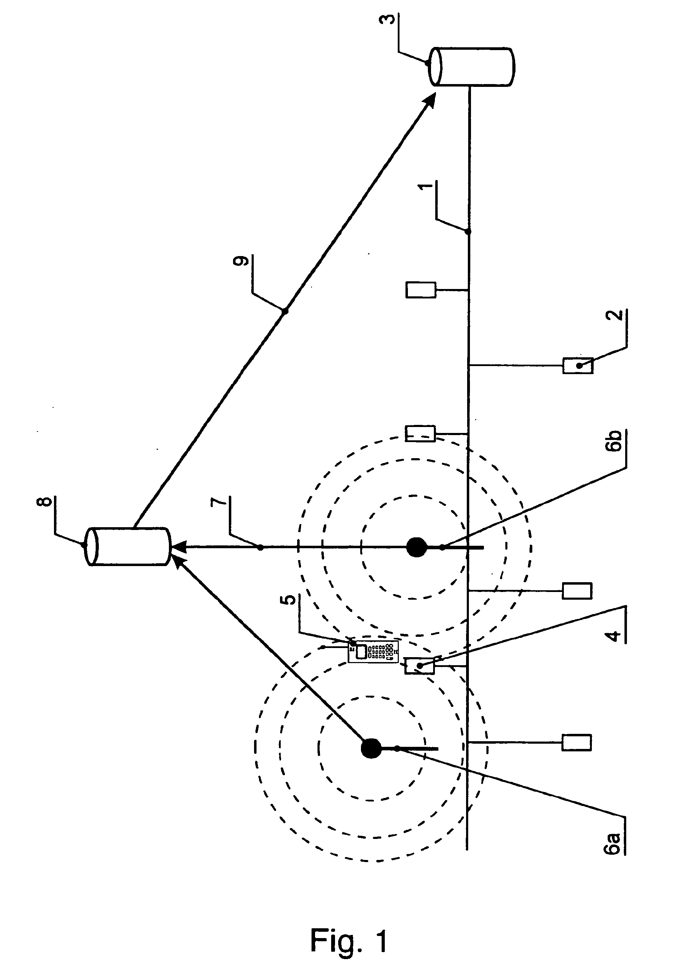

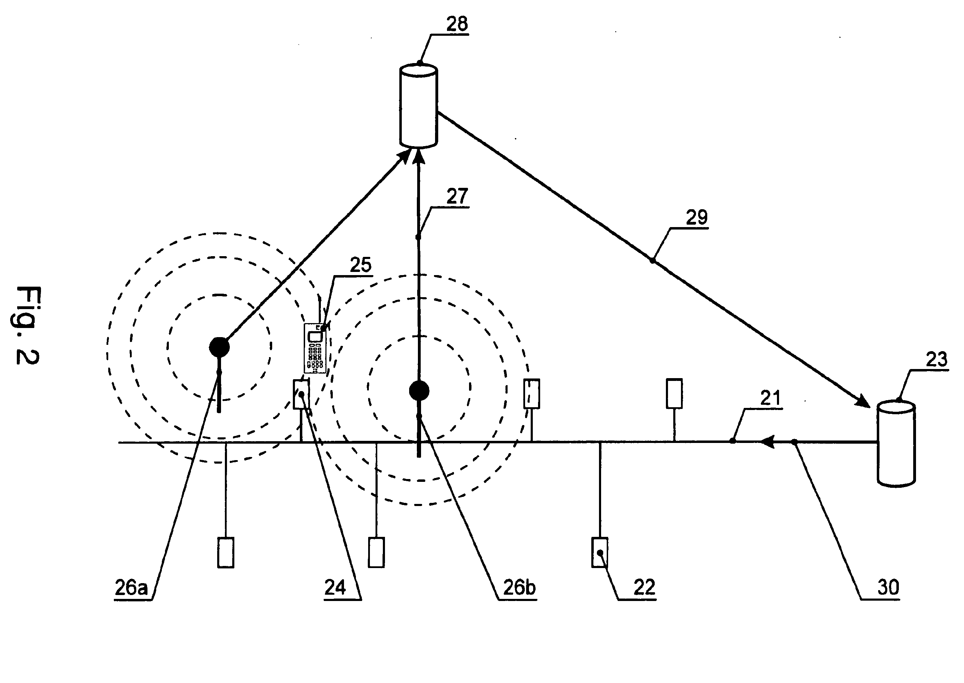

Die Erfindung wird nachfolgend anhand der Figuren 1 und 2 erläutert. Die Figuren zeigen:
- **Figur 1**: eine Positionsdatenzuordnung für Festnetzanschlüsse und,
- **Figur 2**: eine Positionsdatenzuordnung für Internetanschlüsse.

In Figur 1 ist als Festnetz ein Telephonnetz 1 gezeigt, das eine Vielzahl einzelner Anschlüsse 2 vereinigt. Bei den Anschlüssen 2 handelt es sich insbesondere um Telefone oder Telephonanlagen. Ebenfalls an das Netz 1 angeschlossen ist ein von einem Computer realisierter zentraler Server 3. Um einen LBS von einem speziellen Anschluss 4 anzuwählen wird ein Mobiltelephon 5 in unmittelbare Nähe dieses Anschlusses 4 gebracht, das einem Mobilfunknetz mit verschiedenen Sendern 6 zugeordnet ist. Das Mobiltelephon 5 steht in Kontakt zu den Sendern 6a und 6b und wird von diesen eingepeilt. Die daraus ermittelte Ortsinformation wird über die Funkstrecken 7 an einen Mobilfunkserver 8 gesendet. Über den Weg 9 schickt der Mobilfunkserver 8 die Ortsinformation an den Festnetzserver 3, der die Information dem Anschluss 4 zuordnet und speichert. In Kenntnis der Ortsinformation kann vom Anschluss 4 der dem Mobilfunknetz zugehörige LBS abgerufen werden.

Ähnlich funktioniert die Positionsdatenzuordnung für Internetanschlüsse, wie sie in Figur 2 dargestellt ist. Hier ist als Festnetz das Internet 21 gezeigt, das wiederum eine Vielzahl einzelner Anschlüsse 22 vereinigt. Bei den Anschlüssen 22 handelt es sich um Computerzugänge. Ebenfalls an das Netz 21 angeschlossen ist ein zentraler Server 23. Um den LBS von einem speziellen Computer 24 anzuwählen wird ein Mobiltelephon 25 in unmittelbare Nähe dieses Computers 24 gebracht, das einem Mobilfunknetz mit verschiedenen Sendern 26 zugeordnet ist. Das Mobiltelephon 25 steht in Kontakt zu den Sendern 26a und 26b und wird von diesen eingepeilt. Die ermittelte Ortsinformation wird über die Funkstrecken 27 an den Mobilfunkserver 28 gesendet. Über den Weg 29 schickt der Mobilfunkserver 28 die Ortsinformation an den Internetserver 23. In diesem Fall schickt der Internetserver 23 die Ortsinformation über die Strecke 30 an den Computer 24. Von dort kann der dem Mobilfunknetz zugehörige LBS abgerufen werden.

## Patentansprüche

1. Verfahren zur Nutzung eines über ein Mobilfunknetz zugänglichen Dienstes, der Information zur Verfügung stellt, die auf einen momentanen Aufenthaltsort eines mobilen Endgerätes (5,25) bezogen ist, wobei der Aufenthaltsort bei einer Anwahl des Dienstes über eine Peilung des mobilen Endgerätes (5,25) festgestellt wird,
wobei
das mobile Endgerät (5,25) einem stationären Anschluss (4,24) oder einem dem stationären Anschluss zugehörigen Gerät zugeordnet wird, indem das mobile Endgerät in die räumliche Nähe zum stationären Anschluss gebracht wird, wobei das Auswaß der räumlichen Nähe im Verhältnis zur Ortsbezogenheit einer gewünschten Ortsbezogenen Information Zu sehen ist,
wobei der stationäre Anschluss (4,24) seinerseits an ein Kommunikationsnetz (1,21) angeschlossen ist,
wobei der Dienst angewählt und der Aufenthaltsort festgestellt wird, wobei der Aufenthaltsort registriert wird,
wobei der Dienst zum Abruf von ortsbezogener Information über den
stationären Anschluss (4,24) unter Nutzung des Kommunikationsnetzes (1,21) und/oder des Mobilfunknetzes angerufen wird, wobei die gewünschte ortsbezogene Information unter Nutzung des registrierten Aufenthaltsortes vom Dienst bereitgestellt und über das stationäre Endgerät (4,24) ausgegeben wird.

2. Verfahren nach Anspruch 1,
**dadurch gekennzeichnet, dass** der Dienst mittels des mobilen Endgerätes (5,25) angewählt wird.

3. Verfahren nach Anspruch 1 oder 2,
**dadurch gekennzeichnet, dass** dem Dienst über das mobile Endgerät (5,25) eine Kennung des stationären Anschlusses (4,24) mitgeteilt wird, die der Dienst zusammen mit den Koordinaten des Aufenthaltsortes registriert.

4. Verfahren nach Anspruch 1 oder 2,
**dadurch gekennzeichnet, dass** die Koordinaten des Aufenthaltsortes vom mobilen Endgerät (5,25) entnommen und dem Dienst über den stationären Anschluss (4,24) mitgeteilt werden.

5. Verfahren nach einem der vorherigen Ansprüche,
**dadurch gekennzeichnet, dass** dem stationären Anschluss (4,24) ein stationäres Endgerät und/oder ein im Bereich des Anschlusses mobiles Endgerät zugeordnet ist.

6. Verfahren nach Anspruch 5,
**dadurch gekennzeichnet, dass** das mobile Endgerät (5,25) in Sichtweite des stationären Anschluss (4,24), insbesondere in den Radius von 20m zum stationären Anschluss (4,24), gebracht wird.

7. Verfahren nach einem der vorherigen Ansprüche,
**dadurch gekennzeichnet, dass** dem stationären Anschluss (4) eine feste Kennung, insbesondere eine Telephonnummer, zugeordnet ist.

8. Verfahren nach Anspruch 7,
**dadurch gekennzeichnet, dass** das Kommunikationsnetz des stationären Anschluss (4) ein Telephonfestnetz (1) ist.

9. Verfahren nach einem der vorherigen Ansprüche 7 und 8,
**dadurch gekennzeichnet, dass** die Kennung des Festnetzanschlusses (4) zusammen mit den ermittelten Koordinaten des Aufenthaltsortes von dem Dienst gespeichert werden.

10. Verfahren nach einem der vorherigen Ansprüche 7 bis 9,
**dadurch gekennzeichnet, dass** die ermittelten Koordinaten des Aufenthaltsortes in einem dem Anschluss (4) zugeordneten Endgerät gespeichert werden.

11. Verfahren nach einem der vorherigen Ansprüche 7 bis 10,
**dadurch gekennzeichnet, dass**derDienstbeiAnwahl durch das Endgerät die Kennung des Anschlusses erkennt, diesem den entsprechenden Ort zuordnet, den Service bereitstellt und über das Endgerät ausgibt.

12. Verfahren nach einem der vorherigen Ansprüche 1 bis 6,
**dadurch gekennzeichnet, dass** das Kommunikationsnetz des stationären Anschluss das Internet (21) ist, wobei dem Anschluss (24) eine variable Kennung zugeordnet ist und wobei das Endgerät ein Computer ist.

13. Verfahren nach Anspruch 12, **dadurch gekennzeichnet, dass** die dem stationären Anschluss (24) zugeordneten Ortskoordinaten im Computer als Datei, insbesondere in der Art eines "Cookie", gespeichert sind, und dem Dienst bei der Anwahl übermittelt werden.

14. Verfahren nach einem der vorherigen Ansprüche,
**dadurch gekennzeichnet, dass** die Feststellung und Registrierung des Ortes lediglich bei der ersten Anwahl des Dienstes durchgeführt wird und nachfolgend für weitere Anwahlen erhalten bleibt.

15. Verfahren zur Nutzung des Dienstes nach einem der vorherigen Ansprüche,
**dadurch gekennzeichnet, dass** sich das Endgerät unter Übermittlung seiner Kennung bei dem Dienst anmeldet, der Dienst der Kennung den Ort zuordnet und die Information an das Endgerät überträgt.

16. System zur Umsetzung des Verfahrens nach einem der vorherigen Ansprüche aufweisend ein Mobilfunknetz, einen über das Mobilfunknetz anwählbaren Dienst zur Lokalisierung eines dem Mobilfunknetz zuzuordnenden mobilen Endgerätes und zum Abruf lokal relevanter Information und aufweisend ein Festnetz, insbesondere ein Telephonnetz oder das Internet, mit entsprechenden Anschlüssen.

## Claims

1. Method for using a service accessible via a mobile radio network, the service providing information related to a current location of a mobile terminal (5, 25), wherein the location is determined by taking a bearing of the mobile terminal (5, 25) during a call-up of the service, wherein the mobile terminal (5, 25) is assigned to a stationary connection (4, 24) or to a device associated with the stationary connection by placing the mobile device into spatial proximity of the stationary connection, wherein the degree of spatial proximity is to be regarded in relation to the local orientation of a desired location-related information,
wherein the stationary connection (4, 24) itself is connected to a communications network (1, 21), wherein the service is called up and the location is detected,
wherein the location is registered,
wherein the service is called up to retrieve location-related information via the stationary connection (4, 24) by using the communications network (1, 21) and/or the mobile radio network, wherein the desired location-related information is provided by the service by using the registered location and is output via the stationary terminal (4, 24).

2. Method according to claim 1,
**characterised in that** the service is called up by means of the mobile terminal (5, 25).

3. Method according to claim 1 or 2,
**characterised in that** an identifier of the stationary connection (4, 24) is communicated to the service via the mobile terminal (5, 25), the identifier being registered by the service together with the coordinates of the location.

4. Method according to claim 1 or 2,
**characterised in that** the coordinates of the location are taken from the mobile terminal (5, 25) and communicated to the service via the stationary connection (4, 24).

5. Method according to any one of the preceding claims,
**characterised in that** a stationary terminal and/or a mobile terminal in the area of the connection is assigned to the stationary connection (4, 24).

6. Method according to claim 5,
**characterised in that** the mobile terminal (5, 25) is brought within the range of vision of the stationary connection (4, 24), particularly within a radius of 20 m around the stationary connection (4, 24).

7. Method according to any one of the preceding claims,
**characterised in that** a permanent identifier, particularly a telephone number, is assigned to the stationary connection (4).

8. Method according to claim 7,
**characterised in that** the communications network of the stationary connection (4) is a fixed-line telephone network (1).

9. Method according to any one of the preceding claims 7 and 8,
**characterised in that** the identifier of the fixed-line connection (4) is stored by the service together with the determined coordinates of the location.

10. Method according to any one of the preceding claims 7 to 9,
**characterised in that** the determined coordinates of the location are stored in a terminal assigned to the connection (4).

11. Method according to any one of the preceding claims 7 to 10,
**characterised in that** the service recognizes the identifier of the connection when being called up by the terminal, assigns the corresponding location to it, provides the service and outputs it via the terminal.

12. Method according to any one of the preceding claims 1 to 6,
**characterised in that** the communications network of the stationary connection is the internet (21), wherein a variable identifier is assigned to the connection (24) and wherein the terminal is a computer.

13. Method according to claim 12,
**characterised in that** the local coordinates assigned to the stationary connection (24) are stored in the computer in the form of a file, particularly in the form of a "cookie", and are transmitted to the service when it is called up.

14. Method according to any one of the preceding claims,
**characterised in that** the determination and registration of the location are performed only during the first call-up of the service and are subsequently maintained for further call-ups.

15. Method for using the service according to any one of the preceding claims,
**characterised in that** the terminal logs on to the service by transmitting its identifier, the server then assigns the location to the identifier and transmits the information to the terminal.

16. System for implementing the method according to any one of the preceding claims, the system having a mobile radio network, a service that can be called up via the mobile radio network for the localisation of a mobile terminal to be assigned to the mobile radio network and for retrieving locally relevant information, and having a fixed-line network, particularly a telephone network or the internet, with corresponding connections.

## Revendications

1. Procédé d'utilisation d'un service accessible par l'intermédiaire d'un réseau de radiocommunication mobile fournissant de l'information relative à la position momentanée d'un terminal mobile (5, 25), la position étant détectée lors d'une sélection du service par relèvement du terminal mobile (5, 25),
dans lequel le terminal mobile (5, 25) est associé à une connexion fixe (4, 24) ou à un appareil associé à la connexion fixe, en amenant le terminal mobile à proximité spatiale de la connexion fixe, la dimension de la proximité spatiale devant être considérée par rapport au caractère local d'une information à caractère local souhaitée,
la connexion fixe (4, 24) étant, de son côté, connectée à un réseau de communication (1, 21),
le service étant sélectionné et la position étant détectée,
la position étant enregistrée,
le service d'extraction de l'information à caractère local relative à la connexion fixe (4, 24) étant appelé en utilisant le réseau de communication (1, 21) et/ou le réseau de radiocommunication mobile, l'information à caractère local souhaitée étant fournie par le service en utilisant la position enregistrée, et délivrée par l'intermédiare du terminal fixe (4, 24).

2. Procédé selon la revendication 1,
**caractérisé en ce que** le service est sélectionné à l'aide du terminal mobile (5, 25).

3. Procédé selon l'une des revendications 1 ou 2,
**caractérisé en ce qu'**un identifiant de la connexion fixe (4, 24) est communiqué au service par l'intermédiare du terminal mobile (5, 25) et enregistré par le service avec les coordonnées de la position.

4. Procédé selon l'une des revendications 1 ou 2,
**caractérisé en ce que** les coordonnées de la position sont extraites du terminal mobile (5, 25) et communiquées au service par l'intermédiaire de la connexion fixe (4, 24).

5. Procédé selon l'une des revendications précédentes,
**caractérisé en ce qu'**un terminal fixe et/ou un terminal mobile situé dans la zone de la connexion fixe est associé à la connexion fixe (4, 24).

6. Procédé selon la revendication 5,
**caractérisé en ce que** le terminal mobile (5, 25) est amené à portée de vue de la connexion fixe (4, 24), notamment dans le rayon de 20 m par rapport à la connexion fixe (4, 24).

7. Procédé selon l'une des revendications précédentes,
**caractérisé en ce qu'**un identifiant fixe, notamment un numéro de téléphone, est affecté à la connexion fixe (4).

8. Procédé selon la revendication 7,
**caractérisé en ce que** le réseau de communication de la connexion fixe (4) est un réseau de téléphonie fixe (1).

9. Procédé selon l'une des revendications précédentes 7 et 8,
**caractérisé en ce que** l'identifiant de la connexion de réseau fixe (4) est enregistré par le service avec les coordonnées détectées de la position.

10. Procédé selon l'une des revendications précédentes 7 à 9,
**caractérisé en ce que** les coordonnées détectées de la position sont enregistrées dans un terminal associé à la connexion (4).

11. Procédé selon l'une des revendications précédentes 7 à 10,
**caractérisé en ce que**, lors de la sélection par le terminal, le service reconnaît l'identifiant de la connexion, lui affecte la position correspondante, fournit le service et le délivre par l'intermédiaire du terminal.

12. Procédé selon l'une des revendications précédentes 1 à 6,
**caractérisé en ce que** le réseau de communication de la connexion fixe est l'internet (21), un identifiant variable étant affecté à la connexion fixe (24) et le terminal étant un ordinateur.

13. Procédé selon la revendication 12,
**caractérisé en ce que** les coordonnées de position affectées à la connexion fixe (24) sont enregistrées dans l'ordinateur sous forme d'un fichier, notamment sous la forme d'un « cookie », et transmises au service lors de la sélection.

14. Procédé selon l'une des revendications précédentes,
**caractérisé en ce que** la détection et l'enregistrement de la position ne sont effectués que lors de la première sélection du service et restent sauvegardées pour d'autres sélections.

15. Procédé d'utilisation du service selon l'une des revendications précédentes,
**caractérisé en ce que** le terminal s'enregistre auprès du service en fournissant son identifiant et **en ce que** le service affecte la position à l'identifiant et transmet l'information au terminal.

16. Système de mise en oeuvre du procédé selon l'une des revendications précédentes comportant un réseau de radiocommunication mobile, un service pouvant être sélectionné via le réseau de radiocommunication mobile pour localiser un terminal mobile à associer au réseau de radiocommunication mobile et pour extraire d'une information à caractère local (LBS), et comportant un réseau fixe, notamment un réseau de téléphonie ou l'internet doté des connexions correspondantes.
